# EUROPEAN PATENT SPECIFICATION

(11) **EP 0 679 334 B1**
(45) Date of publication and mention of the grant of the patent: **18.10.2000**
(21) Application number: 95107836.9
(22) Date of filing: 08.12.1992
(51) Int. Cl.: A01N 63/00, A23B 7/155, A23B 7/16

(54) **Fungistatic composition and a fungistatic method utilizing the composition**
Fungistatische Zusammensetzung und fungistatisches Verfahren unter Verwendung der Zusammensetzung
Composition fongistatique et procédé fongistatique utilisant cette composition

(30) Priority: 10.12.1991 US 804566
(43) Date of publication of application: 02.11.1995
(62) Divisional of application: 93900951.0
(73) Proprietor: GENENCOR INTERNATIONAL, INC., Palo Alto, California 94304 (US)
(72) Inventor: Ashizawa, Eunice C., Oakland, CA 94619 (US); Lad, Pushkaraj J., San Mateo, CA 94403 (US)
(74) Representative: Brandes, Jürgen, Dr. rer. nat.

(56) References cited:
- EP-A- 0 184 288
- EP-A- 0 434 563
- BE-A- 887 860
- NATURE, vol. 324, 27 November 1986, LONDON GB, pages 365-367, XP002007351 A. SCHLUMBAUM ET AL.: "Plant chitinases are potent inhibitors of fungal growth."

## Description

### FIELD OF THE INVENTION

The present invention relates to a fungistatic composition comprising a peroxidase alone or in combination with a plant chitinase and a fungistatic method utilizing this composition for pre and/or post-harvest crop protection.

### BACKGROUND OF THE INVENTION

Fruit, vegetable and plants are all susceptible to attack by fungi, resulting in loss of crops, decreased shelf-life of produce and ultimately higher costs for consumers. Many fungi are known pathogens in several diseases which harm or destroy crops worldwide. Examples of such fungi include, but are not limited to, Penicillium italicum, Penicillium expansum, Penicillium digitalum, Diplodia natalenses, Botrytis cinerea, Monilinia fructicola, Rhizophus stulonifer, and Rhizopus nigricans. These fungi attack such produce as citrus, apples, cherries, strawberries, nectarines, peaches, etc.

A particularly troublesome fungus has been Botrytis cinerea which causes gray-mold rot in crops such as citrus, apples, grapes, pears, strawberries and cherries. Gray-mold or fruit rot is a widespread disease resulting in severe crop losses. The rot can occur in the field, but latent infections may not become apparent until the crop has been harvested, thus resulting in decreased storage, shipping and shelf-life of the resulting produce. There is a need to develop an antifungal agent(s) useful against many fungi and particularly Botrytis, such agent to be used as a pre or post-harvest treatment of crops susceptible to such infection.

Therefore, it is an object of this invention to provide antifungal agents useful against a variety of fungal pathogens. Another object of this invention is to provide fungistatic agents useful against Botrytis.

Further, another object of this invention is to provide methods for using such fungistatic agents.

### SUMMARY OF THE INVENTION

There is provided a fungistatic composition comprising a peroxidase selected from the group consisting of manganese (II) peroxidase, lignin peroxidase and horseradish peroxidase in combination with a plant chitinase selected from the group consisting of corn, wheat germ, tomato stem, bean leaf, soybean seed, melon plant, cucumber leaf, barley seed and pea pod chitinase as well as a fungistatic method comprising contacting a fungus, or a plant, fruit or vegetable containing such fungus with a fungistatic effective amount of a composition selected from the group consisting of manganese(II) peroxidase, lignin peroxidase and horseradish peroxidase alone or in combination with a plant chitinase selected from the group consisting of corn, wheat germ, tomato stem, bean leaf, soybean seed, melon plant, cucumber leaf, barley seed and pea pod chitinase.

BE-A-887860 discloses molluscicidal compositions containing horseradish peroxidase. Moreover, EP-A-434563 discloses methods for the preparation of manganese(II) peroxidase from a fungal culture and suitable media. However, the use of these peroxidases in a fungistatic method is not disclosed in the available prior art.

In one aspect of the invention, the fungistatic method provide for the inhibition or delay of fungal growth. The inhibition comprises contacting a crop infected with a fungus such as Botrytis with a fungistatic effective concentration of peroxidase alone, or in combination with a chitinase. The method for treating plants, fruits or vegetables comprises contacting, either pre or post-harvest, the surface of such crop with an effective amount of such fungistatic enzymes. Also provided are fungistatic compositions comprising one or more peroxidases; and one or more chitinases in an agriculturally acceptable carrier.

### DETAILED DESCRIPTION OF THE INVENTION

### Peroxidases

Peroxidases such as lignin peroxidase (LiP) and manganese (II) peroxidase (MnP), isolated from Phanerochaete chrysosporium have been widely studied for their role in lignin biodegradation. H.E. Schoemaker, et al., Journal of Biotechnology, 13 (1990) 101-109. Because of this activity, these enzymes have been proposed to be useful in the commercial bleaching and biopulping process. Schoemaker, et al., (supra).

Many micro-organisns produce lignin degrading enzymes. Enzymes from Streptomyces viridosporus, Phanerochete chrysoporium and Trametes (Coriolus) versicolor have been studied extensively. P. chrysoporium and T. versicolor produce two heme-proteins with peroxidase activities. One enzyme is dependent on manganese (II) and is called manganese (II) peroxidase (MnP). The other is generally referred to as lignin peroxidase.

Surprisingly, it has been found that these peroxidases have a fungistatic effect, particularly against Botrytis growth. The mechanism of action of such fungistatic activity is not fully understood.

Peroxidases useful in the present invention include, but are not limited to, peroxidases isolated from the white-rot fungus Phanerochaete chrysosporium, Streptomyces viridosporus or Trametes (Coriolus) versicolor, as well as horseradish peroxidase which is commercially available from Sigma.

The MnP used in the examples herein (with no LiP activity) was obtained from Phanerochete chrysoporium by fermentation. The enzyme in the broth is extracted into polyethylene glycol (PEG) fractions (PEG saturated with water).

### Chitinases

Chitinases useful in the present invention are classified as IUB 3.2.1.14. (Enzyme Nomenclature, 1984 Academic Press, Inc.). Chitinase has been isolated from various plant and bacterial sources. Plant sources include, for example, maize, wheat germ, tomato stem, bean leaf, soybean seed, melon plant, cucumber leaf, barley seed and pea pod (Teichgraber, et al., supra). Bacterial sources include for example Serratia marcesceus, Streptomyces griseus, Pseudomonas stutzeri. (W.K. Roberts, et al., Journal of General Microbiology (1988), 134, 169-176).

Chitinases from plant and bacterial sources have been studied for their antifungal activity.
(W. Roberts, et al., Journal of General Microbiology, (1988), 134, 169-176)

Certain plant chitinases have been shown to demonstrate antifungal activity, although not specifically against Botrytis. W. Roberts, et al., (supra). Further, these chitinases have not previously been used combination with either a Type II endoglycosidase or a peroxidase or both.

The chitinase used in the examples herein was isolated from maize as known by those skilled in the art and was supplied by W.K. Roberts.

Of course, other chitinases may exist which have not yet been identified. Such enzymes as well as the ones described herein, including allelic variations and genetically engineered modifications of such peroxidases and chitinases are within the scope of the present invention.

Any of the enzymes of the present invention may be formulated alone in a composition for inhibiting or delaying fungal growth on infected surfaces of plants, fruits and vegetables. Compositions comprising a peroxidase alone comprise less than or equal to 200 ppm and preferably from about 1 ppm to 50 ppm, more preferably 5 - 25 ppm. Compositions comprising a chitinase comprise, in addition to the peroxidase, less than or equal to 200 ppm and preferably from about 1 ppm to 50 ppm, more preferably 5 - 25 ppm.

The compositions described herein can be formulated in a variety of physical forms, including liquids, gels, pastes and solid particles such as powders and granules. The compositions can be formulated as known by those skilled in the art of agricultural formulations and may comprise surfactants, binders, buffers, enzyme stabilizers or such other additives known to those skilled in the art. Preferred excipients include surfactants such as Triton X 100, commercially available from Rhom-Hass or Sigma and buffer systems comprising sodium acetate. The pH of the compositions is dependent on the optimum pH performance of the enzymes, preferably the compositions are at a pH +/- 1 pH unit from optimum enzyme performance. Thus the compositions preferably have a pH from about 3 to 11, more preferably from about 4 to 8 for good enzyme performance, it being understood that optimum enzyme performance may be a factor of what substrate the enzyme is hydrolyzing.

The preferred peroxidase of the present invention is MnP. the preferred chitinase of the present invention is a plant chitinase purified from maize.

When the fungistatic composition comprises at least two different components, i.e., one or more peroxidase and/or one or more chitinase, each of the components are present at a concentration sufficient to produce a fungistatic effect. A preferred embodiment of this invention is a combination of any two of the enzymes described herein as the combination treatment, although as stated above the enzymes are effective when used alone. A further preferred embodiment is such a combination used for the treatment of fruit infected with Botrytis.

As used herein, a "fungistatic effect" includes the inhibition or delay of growth, change in gross morphology, protoplast formation and/or degradation of the cell wall of a fungus when contacted with a peroxidase or chitinase alone or in combination.

As used herein, a "fungistatic method" refers to a method which produced a fungistatic effect. In one aspect of the invention, the fungistatic method causes the inhibition or delay of fungus growth, and/or changes in the gross morphology of the fungus.

As used herein, a "fungistatic composition" refers to a composition comprising one or more of the following:
a peroxidase and/or a chitinase. Such fungistatic compositions have variable fungistatic effects depending upon the amount and choice of enzyme and depending on whether enzymes are used alone or in combination.

The present fungistatic compositions may be used in the form of pre-or post-harvest protection of crops. Pre-harvest compositions to be applied on crops for fungal control may be in the form of a solution to be applied to crops by methods known in the art such as spraying. Post-harvest compositions to be applied to plants, fruits or vegetables for fungal control may be in the form of dips, drenches, sprays or waxes to be applied to such plant, fruits or vegetables as known to those skilled in the art.

Examples of fungal diseases and their hosts are provided in Table II.

The enzymes useful in the present invention may be active against any of the listed fungal pathogens in addition to other fungal pathogens not listed. The disclosure herein is not intended to be limiting in any way with regard to the scope of fungistatic activity of peroxidases and/or chitinases used alone or in combination.

**TABLE II**

| Blue-Mold Rot | |
|---|---|
| Citrus | (Penicillium italicum) |
| Apples | (Penicillium expansum) |
| Grapes | (Penicillium) |
| Pears | (Penicillium expansum) |
| Plums | (Penicillium) |
| Cherries | (Penicillium expansum) |

| Green-Mold Rot | |
|---|---|
| Citrus | (Penicillium digitatum) |

| Stem-End Rot | |
|---|---|
| Citrus | (Diplodia natalenses) |
| Papayas | (Diplodia natalenses) |

| Gray-Mold Rot | |
|---|---|
| Citrus | (Botrytis cinerea) |
| Apples | (Botrytis) |
| Grapes | (Botrytis cinerea) |
| Pears | (Botrytis cinerea) |
| Strawberries | (Botrytis cinerea) |
| Cherries | (Botrytis cinerea) |

| Brown Rot | |
|---|---|
| Peaches | (Monilinia fructicola) |
| Cherries | (Monilinia fructicola) |
| Apricots | (Monilinia fructicola) |
| Nectarines | (Monilinia fructicola) |

| Rhizopus Rot | |
|---|---|
| Peaches | (Rhizopus stolonifer) |
| Strawberries | (Rhizopus nigricans) |
| Plums | (Rhizopus stolonifer) |
| Cherries | (Rhizopus stolonifer) |
| Nectarines | (Rhizopus stolonifer) |
| Avocados | (Rhizopus stolonifer) |

Additionally, fungal pathogens are known to be the causative agent in several other pre and post-harvest diseases in fruits and vegetables. A discussion of certain of such disease states is set forth below, it being understood that the present invention is not limited to the fungal pathogens and/or specific fruits, vegetables or plants discussed below.

Tomatoes and Potatoes The most serious foliar pathogen of glasshouse tomatoes is leaf mold caused by Cladosporium fulva. It has a widespread distribution, however, and severe losses have been reported following outbreaks on field crops in tropical and sub-tropical areas.

Tomatoes and potatoes are susceptible to early blight which is caused by Alternaria solani. Severe infections may lead to defoliation, truss abortion and black rot of developing fruits. Late blight is caused by Phytophthora infestans which is also a major problem in potatoes. Phytophthora spp produce a range of symptoms on tomatoes including damping-off, root and foot rots, fruit rot and stern infections.

Anthracnose, Colletotrichum coccoides, is a major problem of tomatoes worldwide and also produces a range of symptoms which include black dot, fruit anthracnose, stem and root rot. Anthracnose is mainly a problem in field-grown tomatoes but can also occur in badly managed protected crops.

Fusarium wilt is caused by Fusarium lycopersici and is most destructive in warm climates and warm sandy soils in temperate regions. Although primarily a pathogen of field-grown tomatoes, extensive losses can occur also in protected crops. Infection with the pathogen causes severe wilting and chloroplast degradation resulting in death of the plant. Verticillium alboatrum can also produce similar symptoms, but the disease develops more slowly and causes stunting and a reduction yield rather than death of the plant.

### Stone Fruits

Stone fruits, which include peaches, plums, apricots and cherries, are grown throughout the temperate and sub-tropical regions of the world. A number of fungal diseases can cause significant losses both in the field and in harvested produce.

Brown rot is caused by Monilinia fructicola and affects peaches, cherries, plums and apricots with equal severity. Losses occur in most stone fruit-growing regions where there is high rainfall during the ripening period of the fruit. These losses consist primarily of rotting of the fruit in the orchard, although serious losses may also appear during transit and marketing. Yields may also be reduced by destruction of the blossom. In severe infections, and in the absence of good control measures, 50 to 75 per cent of the fruit may rot on the tree and the remainder may become infected before it reaches the market.

### Grapes

Grape vines are affected by four major fungal diseases found in all grape-producing areas and these diseases can be a major constraint to production.

Powdery mildew, Uncinula necator, also infects horse chestnut and linden and is currently a major problem in Argentina, Brazil, Chile and Turkey. Severely affected young leaves become distorted and discolored and, if flowers become infected, they fail to set fruit. The development of the disease is favored by dry conditions and is the most troublesome disease on grapes in California at present. The disease is spread by air-borne conidia but overwinters either on infected material or as spores in the soil.

Downy mildew, Plasmopara viticola, is very destructive in Europe and the eastern USA, leading to crop losses of up to 75 per cent if not treated. The seriousness of this pathogen in any area or season is dependent on humidity and the frequency/duration of summer rain or heavy dews.

Although several species of fungi can cause fruit rot, grey mold caused by Botrytis cinerea is the most serious. Damage can occur to ripe grapes in the field or in transit. The pathogen is active at low temperatures and can cause appreciable losses on the harvested crop kept in cold storage. Infection generally occurs at blossoming, but the spores remain latent until the fruit begins to ripen. Free moisture on the fruit surface from rain or cracked berries is extremely conducive to the growth and development of the pathogen.

The fungus Guignardia bidwellii is present in Europe, Canada and the USA. It is probably the most serious disease of grapes wherever it occurs, particularly in warm, humid regions. In the absence of effective control, the crop may be totally destroyed through either direct rotting of the berries or blasting of the blossom clusters. Infection via ascospores and conidia occurs throughout the spring and summer, with dispersal and subsequent infection being favored by the presence of free moisture. The pathogen produces numerous red necrotic spots on young leaves which provide the inoculum for the secondary infections of berries and stems.

### Groundnuts

Kernel losses from all diseases are estimated to be approximately 20 per cent of the total yield. Losses are rarely quantified, however, mainly because of a lack of detailed information on the effects of specific pathogens on a field scale. Leaf spot, caused by Cercospora arachidicola, is a widespread disease, development being favored by warm and humid conditions. Severe infections may lead to total defoliation of the plant.

Sclerotinia sclerotiorum causes stem rot and is of major economic importance in the USA where it has been estimated that leaf spot and stem rot together account for over 50 per cent of all losses attributed to disease in groundnuts.

Rust is caused by Puccinia arachidis and appears to be increasing in importance in India and Africa. Development of the disease is enhanced by warm, humid conditions, and plants may become completely defoliated and die as a result of severe infections. Rust currently limits groundnut production in Central America and the Caribbean Islands.

Seedling rots are the major cause of gappy stands and Aspergillus spp are found in all groundnut-growing countries. Aspergillus flavus infects stored seeds and produces aflatoxin which is fatal if consumed by humans or fed to cattle and poultry as pressed cake.

### Apples and Pears

Apple crops are particularly susceptible to fungal attack in all major producing countries. Scab, caused by Venturia inaequalis, is the most important and widespread disease of apples and is currently a major problem throughout Europe and North America. Severe infections result in a reduction in photosynthetic area, extensive defoliation and reduced fruit bud development. If not controlled, losses from apple scab in a badly infected orchard may be more than 70 per cent of the total crop value. However, the severity of the disease varies from year to year with warm, wet springs favoring disease development from spores that have overwintered on the orchard floor.

Powdery mildew is caused by Podosphaera leucotricha and, under conditions which favor pathogen development, can be as damaging as scab, affecting mainly young twigs and leaves.

Newly planted trees in old orchards often fail to become well established. The causal agents of this "replant disease" have not been fully identified but in the UK, Pythiun spp are thought to be involved whilst in Czechoslovakia other microorganisms have been implicated.

### Strawberries

Strawberries are a high value crop grown throughout Europe and North America and are susceptible to a number of potentially devastating diseases.

Grey mold/fruit rot is caused by Botrytis cinerea, and is a widespread disease resulting in severe crop losses in wet seasons. The rot can occur in the field, but latent infections may not become apparent until the fruit has been harvested. Soft rot, caused by Rhizopus sp, is a major cause of crop losses, particularly in storage or in transit. When conditions are favorable, the disease can spread rapidly through storage containers and losses can be very high within a very short period of time.

Mildew, Sphaerotheca macularis, is most severe on protected crops, affecting both leaves and developing fruits which may be unmarketable.

The causal agent of wilt, Verticillium dahliae, is widespread in soils, but severe symptoms only occur in some localities, particularly on light soils. Infection results in wilting and death and is most severe in areas where adverse soil conditions favor the development of wilt.

### EXPERIMENTAL

The following is presented by way of example only and is not to be construed as limiting the scope of the invention.

### Fernbach Protocol

Examples 1-6 were carried out using the Fernbach protocol as set forth herein. Fresh strawberries (∼24 hours after picking) were obtained from a local market. In a sterile hood, strawberries were dipped into 70 mls of test solution (using a 100 ml beaker). The test solutions used for each experiment are identified in each Example. Each strawberry was dipped 10 times. Care was taken to wet the entire strawberry including the calyx. The strawberries were allowed to dry for approximately 5 minutes on an absorbent paper towel in a sterile hood with the blower on. After 5 minutes, the strawberries were put into a sterile fernbach flask covered with a sterile cotton plug and incubated at 15°C. The strawberries were placed in the fernbach so that there was a monolayer of strawberries and all of the strawberries were touching. After three days of incubation, the flasks were rated by panelists for degree of fungal contamination.

### EXAMPLE 1

The following conditions were tested on fresh strawberries:
A) No treatment - control.
B) Buffer solution control: 1:20 dilution of 10mM TES, 85 mM NaCl pH 7.0 buffer (buffer for enzyme stock).
C) Enzyme treatment solution: 1:20 dilution of Endo-H enzyme stock including antifungal component (in 10mM TES, 85 mM NaCl pH 7.0 buffer). Final active enzyme concentration 140 ppm Endo-H.
D) Antifungal component solution: 1:20 dilution (in distilled water) of antifungal component isolated from enzyme stock.

Strawberries were incubated overnight at 25°. Panelists rated D the best, i.e., having least amount of fungal growth. The results of this experiment when viewed in light of results in subsequent experiments detailed below suggest that the buffer pH (7.0) for the enzyme was not optimal and thus the antifungal component above yielded the best results.

### EXAMPLE 2

Based on the results from Example 1, Example 1 was repeated with two variations:
1) All dilutions were made in buffer: 50 mM sodium acetate, 25 mM NaCl pH 5.5.
2) Strawberries were incubated at 15° C. for 3 days.

After 3 days incubation, panelist ranked the enzyme treatment solution (Treatment C above) as the best. After 4 days incubation, panelist had difficulty in differentiating between the buffer solution control (Treatment B) and the enzyme treatment solution (Treatment C).

Since the Endo-H treatment with the antifungal component co-purified therein was judged better than the antifungal component alone at optimal pH conditions for the enzyme, the effects are attributed to the enzyme and not to the antifungal component.

### EXAMPLE 3

The following treatments were tested on fresh strawberries:
A) Untreated control.
B) Buffer control: 5:14 dilution of buffer for enzyme stock in 10mM sodium acetate pH 5.2.
C) Enzyme treatment: 5:14 dilution of Endo-H stock, including antifungal component, in 10mM sodium acetate pH 5.2 (final enzyme concentration 1000 ppm).
D) Inactivated enzyme treatment: 5:14 dilution of enzyme stock boiled for 10 minutes in 10 mM sodium acetate, pH 5.2.

After three days incubation, the enzyme treatment (Treatment C) showed no fungal growth and all panelists chose Treatment C as the best. The enzyme showed best performance at pH 5.2, at a concentration of 1000 ppm.

### EXAMPLE 4

The following treatments were tested on fresh strawberries:
A) Untreated control.
B) Buffer control: 20mM MOPS buffer pH 7.0
C) Lima bean trypsin inhibitor (from Sigma) 1000 ppm (by protein) solution in 20 mM MOPS pH 7.0
D) Corn chitinase (Peak 2) 12.3 ppm (by protein) solution in 20mM MOPS pH 7.0

Seven panelists rated the strawberries. All seven panelists liked the lima bean trypsin inhibitor solution (Treatment C) better than untreated and buffer control treatments (A and B). Three panelists thought that the corn chitinase solution (Treatment D) was better than untreated or buffer control (Treatments A or B). The performance of the lima bean trypsin inhibitor could be due to chitinase present in the sample, and a combination of chitinase and lima bean trypsin inhibitor could have improved performance.

### EXAMPLE 5

The following treatments were tested on fresh strawberries:
A) Buffer control, 20 mM sodium acetate pH 5.0.
B) Manganese (II) peroxidase treatment: 16 ppm (protein) solution in 20 mM sodium acetate pH 5.0.

Seven panelists rated the strawberries. All (7) panelists rated the MnP treatment (Treatment B) superior to the buffer control (Treatment A) in retarding fungal growth on strawberries.

### EXAMPLE 6

Fresh strawberries were treated with the following treatments:
A) No treatment - control.
B) Buffer control: 10 mM sodium acetate, pH 5.0.
C) 1000 ppm Endo-H (produced in E. coli, without any antifungal component) in sodium acetate pH 5.0 buffer.
D) 500 ppm Endo-H (produced in E. coli, without any antifungal component) in sodium acetate pH 5.0 buffer.
E) 500 ppm Endo-H (produced in E. coli, without any antifungal component) and 16 ppm manganese (II) peroxidase in sodium acetate pH 5.0 buffer.
F) 16 ppm manganese (II) peroxidase in sodium acetate pH 5.0 buffer.
G) 500 ppm Endo-H (from Bacillus, contained antifungal molecule) in sodium acetate pH 5.0 buffer.
H) 0.01% Triton X-100 in sodium acetate pH 5.0 buffer.

Seven panelists ranked the strawberries for fungal growth. Strawberries with least fungal growth were rated as best. Strawberries treated with the combination Endo-H and manganese (II) peroxidase (Treatment E) were rated as the best although manganese (II) peroxidase alone or Endo-H alone were more effective than no treatment.

### EXAMPLE 7

Bartlet cherries were obtained from the local market. The cherries had been washed at the store with chlorine water and treated with prolidone, DCNA and mineral oil parafin. Cherries were dipped in treatment solutions described below and the experiment was carried out using the Fernbach protocol previously described. Approximately 30 cherries were included in each treatment.
A) Untreated control.
B) Buffer control, 10 mM sodium acetate pH 5.0.
C) 500 ppm Endo-H* in sodium acetate buffer pH 5.0.
D) 500 ppm Endo-H* * + 16 ppm manganese (II) peroxidase in sodium acetate buffer pH 5.0.
E) 16 ppm manganese (II) peroxidase in sodium acetate buffer pH 5.0.
F) 1000 ppm Endo-H* * in sodium acetate buffer pH 5.0
G) 500 ppm Endo-H* * + 12.3 ppm corn chitinase in sodium acetate buffer pH 5.0.
H) 12.3 ppm corn chitinase in sodium acetate buffer pH 5.0.

*Endo-H preparation containing antifungal component

Cherries were kept in growth chambers for 5 days and than at room temperature overnight. The cherries were hard to rate because they were subject to both brown rotting and white sporulation.

Average rankings of cherries by three panelists were:
F (best)> C> G> D> B> E> A> H>.

Examples 1-7 demonstrate that treatment of fruits (and vegetables or plants) with the claimed enzymes, as compared to no treatment, results in a marked delay in the onset of fungal growth on the treated fruit. Furthermore, depending on the fungus and the particular fruit or vegetable being treated, a combination may be preferred over any of the individual enzymes used alone. See, for example, Example 6 wherein the combination of Endo-H and manganese (II) peroxidase was preferred, however MnP and Endo-H alone werealso effective. Also, Example 3 wherein Endo-H alone (1000 ppm) was effective and was the preferred treatment.

## Claims

1. A fungistatic composition comprising a peroxidase selected from the group consisting of manganese (II) peroxidase, lignin peroxidase and horseradish peroxidase in combination with a plant chitinase selected from the group consisting of corn, wheat germ, tomato stem, bean leaf, soybean seed, melon plant, cucumber leaf, barley seed and pea pod chitinase.

2. A fungistatic composition of claim 1 wherein said peroxidase is manganese (II) peroxidase and comprises from 1 ppm to 50 ppm of said composition.

3. A fungistatic composition of claim 1 wherein said chitinase is corn chitinase and comprises from 1 ppm to 50 ppm of said composition.

4. A fungistatic composition of claim 1 wherein said peroxidase is manganese (II) peroxidase which comprises from 1 ppm to 50 ppm and said chitinase is corn chitinase which comprises from 1 ppm to 50 ppm of said composition.

5. A fungistatic composition comprising lignin peroxidase.

6. A fungistatic method comprising contacting a fungus, or a plant, fruit or vegetable containing such fungus with a fungistatic effective amount of a composition of any of claims 1 to 4 or with a peroxidase alone selected from the group consisting of manganese(II) peroxidase, lignin peroxidase and horseradish peroxidase.

## Patentansprüche

1. FungistatiSche Zusammensetzung, umfassend eine Peroxidase, ausgewählt aus der Gruppe bestehend aus Mangan(II)peroxidase, Ligninperoxidase und Meerrettichperoxidase in Kombination mit einer Pflanzenchitinase, ausgewählt aus der Gruppe bestehend aus Mais-, Weizenkeim-, Tomatenstamm-, Bohnenblatt-, Sojabohnensamen-, Melonenpflanze-, Gurkenblatt-, Gerste- und Erbsenhülsen-Chitinase.

2. Fungistatische Zusammensetzung nach Anspruch 1, in der die Peroxidase Mangan(II)peroxidase ist und 1 ppm bis 50 ppm der Zusammensetzung ausmacht.

3. Fungistatische Zusammensetzung nach Anspruch 1, in der die Chitinase Mais-Chitinase ist und 1 ppm bis 50 ppm der Zusammensetzung ausmacht.

4. Fungistatische Zusammensetzung nach Anspruch 1, in der die Peroxidase Mangan(II)peroxidase ist, die von 1 ppm bis 50 ppm ausmacht, und die Chitinase Mais-Chitinase ist, die von 1 ppm bis 50 ppm der Zusammensetzung ausmacht.

5. Fungistatische Zusammensetzung, umfassend Ligninperoxidase.

6. Fungistatisches Verfahren, bei dem ein Fungus, oder eine Pflanze, eine Frucht oder ein Gemüse, die/das einen solchen Fungus enthält, mit einer fungistatisch wirksamen Menge einer Zusammensetzung gemäß Anspruch 1 bis 4 oder einer Peroxidase alleine, ausgewählt aus der Gruppe, bestehend aus Mangan(II)peroxidase, Ligninperoxidase und Meerrettichperoxidase, in Kontakt gebracht wird.

## Revendications

1. Composition fongistatique comprenant une peroxydase sélectionnée dans le groupe comprenant la peroxydase du manganèse(II), la peroxydase de la lignine et la peroxydase du raifort en combinaison avec une chitinase de plantes sélectionnée dans le groupe comprenant la chitinase du maïs, du germe de blé, du tronc de tomate, de la feuille d'haricot, de la graine de soja, de la plante de mèlon, de la feuille de concombre, de la graine d'orge et de la cosse de pois.

2. Composition fongistatique de la revendication 1 où ladite peroxydase est une peroxydase du manganese(II) et comprend entre 1 et 50 parties par million de ladite composition.

3. Composition fongistatique de la revendication 1 où ladite chitinase est une chitinase du maïs et comprend entre 1 et 50 parties par million de ladite composition.

4. Composition fongistatique de la revendication 1 où ladite peroxydase est une peroxydase du manganèse(II), présente dans une quantité comprise entre 1 et 50 parties par million et ladite chitinase est une chitinase du maïs et comprend entre 1 et 50 parties par million de ladite composition.

5. Composition fongistatique comprenant la peroxydase de la lignine.

6. Méthode fongistatique impliquant le contact d'un champignon, ou d'une plante, d'un fruit ou d'un légume contenant ce champignon, avec une quantité fongistatique efficace d'une composition de la revendication 1 à 4, ou avec une peroxydase seule sélectionnée dans le groupe comprenant la peroxydase du manganèse(II), la peroxydase de la lignine et la peroxydase du raifort.
